# EUROPÄISCHE PATENTANMELDUNG

(11) **EP 4 847 956 A1**
(43) Veröffentlichungstag der Anmeldung: **02.12.2026**
(21) Anmeldenummer: 26181995.7
(22) Anmeldetag: 29.05.2026
(51) Int. Cl.: G01S 7/539, G01S 15/42

(54) **VERFAHREN ZUR REGELUNG VON ULTRASCHALLPARAMETERN**

(30) Priorität: 30.05.2025 EP 25179851
(71) Anmelder: MOBA Mobile Automation AG, 65555 Limburg (DE)
(72) Erfinder: JURDZINSKI, Jan, 65555 Limburg (DE); JURASZ, Jaroslaw, verstorben (DE); MÜLLER, Laurenz, 65555 Limburg (DE)
(74) Vertreter: Zimmermann, Tankred Klaus

(57) **Zusammenfassung**

Messvorrichtung, mit folgenden Merkmalen: einem Ultraschallsensor, der ausgebildet ist, ein Messsignal mit einem entsprechenden Sendeparameter auszusenden und ein aus einer Reflexion des Messsignals herrührendes Echosignal zu empfangen; einem Regelkreis, der ausgebildet ist, einen Empfangsparameter des Echosignals zu ermitteln und in Abhängigkeit von dem Empfangsparameter den Sendeparameter anzupassen.

## Beschreibung

Ausführungsbeispiele der vorliegenden Erfindung beziehen sich auf eine Messvorrichtung sowie ein entsprechendes Betriebsverfahren. Bevorzugte Ausführungsbeispiele beziehen sich auf eine Regelung der Empfangsamplitude eines Ultraschallsensors mittels Pulsweitenmodulation. Weitere Ausführungsbeispiele beziehen sich auf eine Arbeitsmaschine, wie z. B. eine Baumaschine oder eine landwirtschaftliche Maschine, mit einer entsprechenden Messvorrichtung. Im Allgemeinen liegen Ausführungsbeispiele der Erfindung auf dem Gebiet von Ultraschallsensoren, insbesondere auf einer Ultraschallmessvorrichtung zur Abstandsmessung bei mobilen Bau-, Arbeits- oder Landmaschinen.

Ultraschallmessvorrichtungen zur Abstandsmessung werden bei mobilen Baumaschinen, Arbeitsmaschinen und landwirtschaftlichen Maschinen insbesondere zu deren Steuerung eingesetzt, beispielsweise bei einer Höhennivellierung einer Einbaubohle eines Straßenfertigers oder bei einer Tiefenführung eines landwirtschaftlichen Anbaugeräts. Grundsätzlich wird der zu messende Abstand zwischen einem Ultraschallsensor, der Ultraschall-Abstandsmesseinrichtung und dem bezüglich seiner Lage zu bestimmenden Objekt, beispielsweise ein Referenzdraht oder Referenzseil, oder ein zu bearbeitender Untergrund oder Boden, aus der Laufzeit eines Ultraschallsignals oder Ultraschallpulses von dem Ultraschallsensor bis zu dem Messobjekt und zurück zu dem Ultraschallsensor ermittelt. Wie ebenfalls bekannt ist, hängt die Laufzeit des Ultraschallsignales nicht nur von der durchlaufenen Strecke und somit von der Messentfernung ab, sondern auch von weiteren Parametern und Umwelteinflüssen, wie beispielsweise der Lufttemperatur, dem Luftdruck, der Luftfeuchtigkeit, der Luftströmung und möglichen Schallbeugungen aufgrund von Luftschichtungen mit verschiedenen Temperaturen. Ultraschallsensoren sind aus dem Stand der Technik hinreichend bekannt und bestehen im Wesentlichen aus einem Ultraschallgenerator und einem Ultraschallwandler.

Nachfolgend werden einige Stand-der-Technik-Varianten erläutert: Die DE 10 2016 118 721 A1 beschreibt ein Verfahren zum Betreiben eines Ultraschallschwingers, bei dem der Ultraschallschwinger mittels eines pulsbreitenmodulierten elektrischen Anregungssignals zu Schwingungen angeregt wird, bei dem pulsbreitenmodulierte Anregungssignal durch signaltechnische Verknüpfung eines elektrischen Anregungssignals mit einem Pulsbreitenmodulationssignal erzeugt wird, und bei dem das Pulsbreitenmodulationssignal in Abhängigkeit von einer vorgegebenen an den Ultraschallschwinger zu übertragenen Leistung angepasst wird. Weiterhin beschreibt die DE 42 33 016 A1 eine Einrichtung für ein Ultraschallreinigungsgerät mit einem Ultraschallgenerator und einem Ultraschallwandler, der die erzeugten Ultraschallschwingungen in das Reinigungsmedium abstrahlt. Eine Modulation der Spannung des Ultraschallgenerators erfolgt durch Pulsbreitenmodulation. Ferner beschreibt die DE 10 2021 106 587 A1 einen Ultraschallgenerator sowie ein Verfahren zum Betreiben des Ultraschallgenerators. Der Ultraschallgenerator enthält eine Schalteinheit, wobei eine Steuereinheit das Schaltelement zur Regelung der Sendeleistung mit einem PWM-Signal mit einem Puls-Pause-Verhältnis ansteuert. Weiteren bekannten Stand der Technik bilden die DE 38 16 198 C1 und die DE 42 06 990 A1.

Es hat sich gezeigt, dass die aktuelle PWM-Regelung nicht ausreichend ist, um flexibel auf unterschiedliche Umgebungsbedingungen zu reagieren. Deshalb ist es die technische Aufgabe, ein Konzept für eine Messvorrichtung zu schaffen, das flexibel für unterschiedliche Umgebungsbedingungen einsetzbar ist.

Die Aufgabe wird durch den Gegenstand der unabhängigen Patentansprüche gelöst.

Ausführungsbeispiele der vorliegenden Erfindung schaffen eine Messvorrichtung mit einem Ultraschallsensor und einem Regelkreis. Der Ultraschallsensor ist ausgebildet, ein Messsignal mit einem entsprechenden Sendeparameter, z. B. einer Pulsweite, auszusenden und ein aus einer Reflexion des Messsignals herrührendes Echosignal zu empfangen. Der Regelkreis ist ausgebildet, einen Empfangsparameter des Echosignals zu ermitteln und in Abhängigkeit von dem Empfangsparameter den Sendeparameter anzupassen.

Kerngedanke der vorliegenden Ausführungsbeispiele ist es, beim Ultraschallsensor einen entsprechenden Empfangsparameter, wie z. B. die Amplitude eines empfangenen (Echo)-Signals eines zuvor ausgesendeten Signals zu ermitteln, und z. B. mittels einer Pulsmodulation die Höhe dieser Empfangsamplitude zu regeln. Mit veränderter Ansteuerung wird somit auf die (resultierende) Empfangsamplitude geregelt, und nicht auf die Sendeleistung des Ultraschallwandlers. Die Sendeleistung ist die Stellgröße des geschlossenen Regelkreises, wohingegen die Empfangsamplitude die zu regelnde Größe darstellt. Im Gegensatz zum Stand der Technik, bei welchem die Regelung der Sendeleistung des Ultraschallwandlers ohne Feedback erfolgt, wird also nun bei der Regelung die Empfangsamplitude mitberücksichtigt. Die Berücksichtigung eines derartigen Feedbacks ermöglicht vorteilhafterweise, dass das Messsignal, d. h. also das auszusendende Signal, in Abhängigkeit von den vorliegenden Umgebungsbedingungen entsprechend angepasst wird.

Zum Hintergrund: Die Amplitude eines empfangenen (Echo)-Signals eines zuvor ausgesendeten Ultraschallsignals weist einen hohen Dynamikbereich auf. Bei stark reflektierenden Oberflächen, wie beispielsweise Glattasphalt oder Beton, führen zu hohe Amplituden zu einer Sättigung. Bei schlechten Reflektoren, wie beispielsweise einem Referenzseil oder einem Referenzdraht, ist die Empfangsamplitude sehr schwach. Amplitudenschwankungen oder Verzerrungen entstehen weiterhin durch Distanzveränderungen, Interferenz, Wind, Hitze oder bei einer Veränderung des Anstellwinkels des Sensors. Auch führen Störreflexionen, beispielsweise durch Unebenheiten auf den reflektierenden Oberflächen, sowie Qualitätsschwankungen, Alterung und Verschmutzung der verwendeten Ultraschallwandler zu Veränderungen der Empfangsamplitude.

Ein Ausführungsbeispiel schafft eine Messvorrichtung, bei welcher der Sendeparameter eine Pulsweite oder ein Puls-Pause-Verhältnis des Messsignals charakterisiert. Insofern erfolgt entsprechend Ausführungsbeispielen durch Anpassung des Sendeparameters eine Veränderung der Pulsweite und damit der Leistung des Messsignals. Das heißt, dass entsprechend Ausführungsbeispielen die Sendeleistung des Ultraschallwandlers mittels einer Pulsweitenmodulation so verändert wird, dass die Amplitude eines empfangenen (Echo)-Signals möglichst konstant und außerhalb der Sättigung bleibt. Dadurch werden vorteilhafterweise Störreflexionsanteile vermindert. Bei geringen Empfangsamplituden, d. h. bei schwachen Reflexionen, wird demnach das Puls-Pause-Verhältnis der Ansteuerung erhöht, so dass sich die Sendeleistung des Ultraschallwandlers sowie die Empfangsamplitude eines reflektierten (Echo)-Signals ebenfalls erhöhen.

Entsprechend Ausführungsbeispielen kann bei der Messvorrichtung alternativ oder zusätzlich zu der oben beschriebenen Veränderung des Puls-Pause-Verhältnisses der Sendeparameter eine Pulshöhe oder eine Puls-Amplitude des Messsignals charakterisieren, d. h. es erfolgt durch Anpassung des Sendeparameters eine Veränderung der Pulshöhe bzw. der Puls-Amplitude und damit der Leistung des Messsignals. Das heißt, dass entsprechend Ausführungsbeispielen die Sendeleistung des Ultraschallwandlers mittels einer Veränderungen der Pulshöhe bzw. der Puls-Amplitude so verändert wird, dass die Amplitude eines empfangenen (Echo)-Signals möglichst konstant und außerhalb der Sättigung bleibt. Dadurch ergeben sich die gleichen Vorteile wie bei der oben beschriebenen Veränderung des Puls-Pause-Verhältnisses, nämlich eine Anpassung der ausgesendeten Energie um so Störreflexionsanteile effektiv zu vermindern. Bei geringen Empfangsamplituden, d. h. bei schwachen Reflexionen, wird demnach die Pulshöhe bzw. die Puls-Amplitude der Ansteuerung erhöht, so dass sich die Sendeleistung des Ultraschallwandlers sowie die Empfangsamplitude eines reflektierten (Echo)-Signals ebenfalls erhöhen.

Entsprechend Ausführungsbeispielen kann der Regelkreis ausgebildet sein, den Sendeparameter gleitend oder in festen Schritten anzupassen. Das Puls-Pause-Verhältnis (Tastgrad bzw. Duty-Cycle) und/oder die Puls-Amplitude kann entsprechend Ausführungsbeispielen entweder dynamisch bzw. gleitend angepasst werden. Denkbar ist es auch, das Puls-Pause-Verhältnis in festen Schritten, bspw. in Schritten von 3 %, 5 % oder 10 % zu verändern.

Nachfolgend werden optionale Merkmale des Regelkreises erläutert. Gemäß Ausführungsbeispielen umfasst der Regelkreis ein Vergleichselement, das ausgebildet ist, eine Ist-Amplitude des Echosignals als Empfangsparameter mit einer Soll-Amplitude (für das Echosignal) zu vergleichen und in Abhängigkeit von dem Vergleich den Sendeparameter anzupassen. Somit kann vorteilhafterweise immer auf eine gewünschte Soll-Amplitude geregelt werden, wobei, wie oben bereits erläutert ist, hier die Amplitude des Reflexions- bzw. Echosignals gemeint ist. Die Soll-Amplitude ist dann so festgelegt, dass eine gute Auswertung in einem nicht verzerrten oder nicht übersteuerten Bereich beispielsweise möglich ist. Das heißt also, dass entsprechend Ausführungsbeispielen der Regelkreis ausgebildet ist, eine Regelung auf die Ist-Amplitude des Echosignals als Empfangsparameter durchzuführen. Beispielsweise kann die Regelung so durchgeführt werden, dass die Ist-Amplitude des Echosignals konstant oder gleich der Soll-Amplitude gehalten wird. Entsprechend Ausführungsbeispielen kann der Regelkreis dazu ausgebildet sein, die Pulsweite und/oder die Puls-Amplitude zu reduzieren, wenn eine Ist-Amplitude des Echosignals als Empfangsparameter höher als eine Soll-Amplitude ist. Andersherum kann die Pulsweite und/oder die Puls-Amplitude erhöht werden, wenn eine Ist-Amplitude des Echosignals als Empfangsparameter geringer als eine Soll-Amplitude ist. In Allgemeinen Worten heißt das, dass entsprechend Ausführungsbeispielen der Regelkreis eine Signalauswertung aufweist, die ausgebildet ist, einen Empfangsparameter zu bestimmen. Der Empfangsparameter kann beispielsweise eine Ist-Amplitude des Echosignals sein. Insofern wird eine Ist-Amplitude des Echosignals als Empfangsparameter bestimmt.

Entsprechend einem Ausführungsbeispiel weist der Regelkreis einen Regler auf, der ausgebildet ist, basierend auf einer Regeldifferenz, insbesondere einer Regeldifferenz resultierend aus einem Soll-Ist-Vergleich der Amplituden, einen Anpassungsparameter zu bestimmen. Entsprechend einem Ausführungsbeispiel weist der Regelkreis einen PWM-Modulator auf, der ausgebildet ist, ausgehend von einem Anpassungsparameter die Pulsweite und/oder die Puls-Amplitude des Messsignals zu variieren. Entsprechend einem Ausführungsbeispiel ist der Regelkreis ausgebildet, das Echosignal zu analysieren. Dieser bestimmt beispielsweise eine Hüllkurve des Echosignals und/oder eine maximale Ist-Amplitude des Echosignals. Das kann beispielsweise auf Basis der Hüllkurve erfolgen. Des Weiteren kann der Regelkreis ausgebildet sein, für die Analyse eine Filterung des Echosignals durchzuführen. Alle diese Ausführungsbeispiele, die den Regelkreis betreffen, sind selbstverständlich kombinierbar, insgesamt oder auch einzeln für sich. Insofern wird durch die optionalen Merkmale des Regelkreises ein Ausführungsbeispiel oder sogar ein bevorzugtes Ausführungsbeispiel geschaffen, wobei weitere Ausführungsbeispiele durch andere Kombinationen dieser optionalen Merkmale möglich wären.

Entsprechend einem Ausführungsbeispiel weist die Messvorrichtung mehrere Ultraschallsensoren auf. Diese können beispielsweise nebeneinander in einem sogenannten Sonic-Ski-Sensor angeordnet sein und zusammen agieren. Beispielsweise kann jeder Ultraschallsensor einzeln angeregt werden, so dass über die Sensorwerte ein Mittelwert gebildet werden kann. D. h., ein Mittelwert kann sowohl über mehrere Sensorwerte eines einzelnen Ultraschallsensors als auch über mehrere Sensorwerte von verschiedenen Ultraschallsensoren gebildet werden. Hierbei ist es entsprechend Ausführungsbeispielen möglich, dass jeder einzelne der mehreren Ultraschallsensoren getrennt oder unabhängig voneinander durch den Regelkreis geregelt wird. Alternativ ist der Regelkreis dazu ausgebildet, mehrere oder alle der mehreren Ultraschallsensoren gemeinsam zu regeln.

An dieser Stelle sei angemerkt, dass gemäß Ausführungsbeispielen die Reflexion als Reflexion an einer Referenz verstanden werden kann, insbesondere einem Referenzdraht, einem Referenzseil, einem zu bearbeitenden Untergrund oder einem Boden. Entsprechend einem Ausführungsbeispiel ist die Messvorrichtung mit einer Steuerung für eine Höhenregelung und/oder eine Tiefenführung und/oder eine Richtungsregelung für eine Arbeitsmaschine oder eine Baumaschine verbunden.

Ein weiteres Ausführungsbeispiel schafft eine Arbeitsmaschine, insbesondere eine Baumaschine oder landwirtschaftliche Maschine, mit einer entsprechenden Messvorrichtung, sowie einer Steuerung, die ausgebildet ist, eine Höhenregelung oder eine Richtungssteuerung und/oder eine Tiefenführung durchzuführen. Natürlich können auch Kombinationen dieser Regelungen/Steuerungen durchgeführt werden.

Entsprechend einem Ausführungsbeispiel eignet sich die oben erläuterte Messvorrichtung beispielsweise für die Anwendung in einem Steuersensor für eine Baumaschine, wie in der eingangs zum Stand der Technik genannten DE 38 16 198 C1 beschrieben. Denn dieser Steuersensor umfasst ein oder mehrere Ultraschallsensoren und kann zur Höhen- und/oder Richtungssteuerung bei einem Straßenfertiger, einem Gleitschalungsfertiger, einer Straßenfräse (bspw. einer Kaltfräse zum Abfräsen von Asphalt- oder Betonbelägen) oder einem Grader verwendet werden, und zwar für eine Abstandsbestimmung zu einem Führungs- oder Referenzseil oder für eine Abstandsbestimmung zu einem zu bearbeitenden Untergrund. Ein Führungs- oder Referenzseil ist jedoch ein schlechter Reflektor. Ein zu bearbeitender Boden oder Untergrund ist dagegen ein sehr guter Reflektor, weist jedoch einige Störfaktoren wie Steine, Unebenheiten etc. auf. Demnach ist es erfindungsgemäß von Vorteil, die Ansteuerung der im Steuersensor angeordneten Ultraschallwandler über das Puls-Pause-Verhältnis und/oder über die Puls-Amplitude einer Pulsweitenmodulation an die Amplitude der empfangenen (Echo)-Signale entsprechend anzupassen. Wenn der Steuersensor eine Mehrzahl von Ultraschallsensoren umfasst (sogenanntes Mehrkopfsystem, beispielsweise der Sonic-Ski-Sensor), die mit der Auswerteschaltung zum Erzeugen der Höhen- und/oder Richtungssteuersignale verbunden sind, ist es erfindungsgemäß möglich, eine separate Ansteuerung/Regelung der Einzelwandler durchzuführen.

Ein weiteres Ausführungsbeispiel schafft ein Verfahren zum Betreiben einer Messvorrichtung mit einem Ultraschallsensor. Das Verfahren umfasst die Schritte:
- Ermitteln eines Empfangsparameters des Echosignals; und
- Anpassen des Sendeparameters in Abhängigkeit von dem Empfangsparameter.

Selbstverständlich kann das Verfahren auch computerimplementiert sein. Insofern wird ein Computerprogramm zur Durchführung des oben genannten Verfahrens geschaffen, wenn das Verfahren auf einem Computer oder einer Steuerung abläuft.

Ein Ausführungsbeispiel schafft eine Messvorrichtung, die eine Auswerteeinheit aufweist, die ausgebildet ist, basierend auf dem Echosignal einen Parameter, der die Oberflächenstruktur beschreibt, zu bestimmen. Der Parameter kann ein Rauheitsparameter oder Parameter zur Beschreibung der Krümelstruktur oder Oberflächenstruktur sein. Entsprechend Ausführungsbeispielen kann das Bestimmen des Parameters ein Erfassen und/oder Abtasten einer Echosignalcharakteristik in dem Echosignal umfassen.

Ausführungsbeispielen dieses Aspektes liegt die Erkenntnis zugrunde, dass eine bestimmte Echocharakteristik, die mit dem Messsignal mitgemessen wird, eine Auskunft über die Rauheit, wie z. B. eine Körnung oder Struktur der Oberfläche oder des Bodens gibt. Hintergrund ist, dass die Echocharakteristik eines offenporigen, d. h., also rauen Untergrunds eine andere ist als die Echocharakteristik eines geschlossenen, d. h., möglichst glatten Untergrunds. Gerade im landwirtschaftlichen Einsatz ist diese Information aufschlussreich und kann vom Benutzer und/oder einem Algorithmus, der die Benutzung steuert, entsprechend berücksichtigt werden.

Entsprechend Ausführungsbeispielen ist es möglich, dass die Messvorrichtung mit einer Steuerung gekoppelt ist, die ausgebildet ist, eine Höhenregelung und/oder eine Richtungssteuerung und/oder eine Tiefenführung und/oder (allgemein) eine Werkzeugregelung (für ein Werkzeug zur Veränderung der Bodenstruktur) in Abhängigkeit des genannten Parameters durchzuführen.

Ein weiteres Ausführungsbeispiel schafft eine Messvorrichtung mit einem Ultraschallsensor, der ausgebildet ist, ein Messsignal mit einem entsprechenden Sendeparameter auszusenden und ein aus einer Reflexion des Messsignals herrührendes Echosignal zu empfangen, sowie eine Auswerteeinheit, die ausgebildet ist, basierend auf dem Echosignal einen Parameter, der die Oberflächenstruktur beschreibt, zu bestimmen, wobei die Bestimmung des Parameters Erfassen und/oder Abtasten einer Echosignalcharakteristik in dem Echosignal umfasst.

Weiterbildungen sind in den Unteransprüchen definiert. Nachfolgend werden Ausführungsbeispiele anhand der beiliegenden Zeichnungen erläutert. Es zeigen:
- Fig. 1a: ein schematisches Blockschaltbild eines Regelkreises gemäß einem Ausführungsbeispiel;
- Fig. 1b: ein schematisches Blockschaltbild einer Messvorrichtung gemäß einem Ausführungsbeispiel;
- Fig. 2: ein schematisches Diagramm eines generierten PWM-Ansteuerungssignals zur Erläuterung von Ausführungsbeispielen;
- Fig. 3: ein schematisches Diagramm mit zwei Hüllkurven von Ultraschallsignalen zur Erläuterung von Ausführungsbeispielen;
- Fig. 4: ein schematisches Diagramm von zwei Hüllkurven der Ultraschallsignale aus Fig. 3 sowie eine exemplarische Soll-Amplitude zur Erläuterung von Ausführungsbeispielen;
- Fig. 5a/5b: schematische Darstellungen von Ultraschallsensoren gemäß Ausführungsbeispielen;
- Fig. 6: eine schematische Darstellung eines Straßenfertigers als Anwendungsbeispiel für eine Messvorrichtung gemäß Ausführungsbeispielen;
- Fig. 7: eine schematische Darstellung eines Signalverlaufs zur Erläuterung von einem Ausführungsbeispiel zur Bestimmung der Oberflächenstruktur gemäß Ausführungsbeispielen;
- Fig. 8: ein schematisches Blockschaltbild eines Regelkreises mit erweiterter Funktionalität gemäß Ausführungsbeispielen;
- Fig. 9a-c: schematische Diagramme von Messsignalen zugeordnet zu unterschiedlichen Oberflächen zur Erläuterung von Ausführungsbeispielen; und
- Fig. 10: eine schematische Darstellung eines Ultraschallsensors zum Einsatz bei Ausführungsbeispielen.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit den gleichen Bezugszeichen versehen sind, so dass die Beschreibung derer aufeinander anwendbar bzw. austauschbar ist.

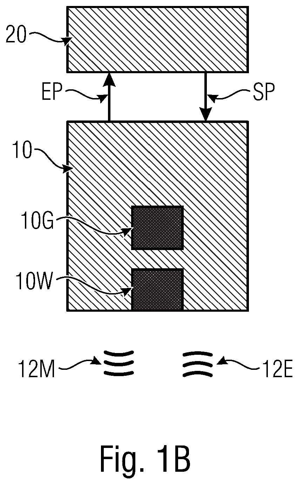

Ultraschallsensoren sind aus dem Stand der Technik bekannt und bestehen, wie Fig. 1b zeigt, im Wesentlichen aus einem Ultraschallgenerator 10G und einem Ultraschallwandler 10W. Ultraschallgenerator 10G und Ultraschallwandler 10W bilden im Wesentlichen den Ultraschallsensor 10.

Fig. 1b zeigt einen Ultraschallwandler 10, der mit einem entsprechenden Regelkreis 20 verbunden ist.

Der Ultraschallsensor 10 ist ausgebildet, ein Messsignal 12M mit einem entsprechenden Sendeparameter auszusenden, wobei eine Reflexion des Messsignals 12M in einem Echosignal 12E resultiert. Dieses Echosignal 12E wird durch den Ultraschallsensor 10 wieder empfangen.

Im Detail: Der Ultraschallgenerator 10G kann z.B. mittels eines Hochfrequenztransformators eine Hochfrequenzspannung erzeugen, mit der ein Wandlerelement des Ultraschallwandlers 10W zu Ultraschallschwingungen anregbar ist. Um die von dem Wandlerelement an die Umgebung abgegebene (Schall-)Leistung zu verändern, wird die elektrische Leistung des von dem Ultraschallgenerator 10G erzeugten Anregungssignals an den Ultraschallwandler 10W variiert, beispielsweise durch eine Pulsweitenmodulation (PWM).

Die Charakteristik, wie z. B. die Amplitude oder die Leistung des Messignals 12M, ist von einem entsprechenden Sendeparameter, wie z. B. der Pulsweite, oder dem Duty-Cycle oder der Pulshöhe bzw. der Puls-Amplitude abhängig. Hierbei kann es sich also beispielsweise um einen Parameter handeln, der die Pulsweite der Pulsweitenmodulation oder einen anderen die Pulsweitenmodulation beeinflussenden Parameter wie bspw. die Puls-Amplitude handeln, beschreibt. Beispiele sind Puls-Pause-Verhältnis bzw. Duty-Cycle oder die Puls-Amplitude, die diesen Sendeparameter charakterisieren können. Diese Sendeparameter haben Einfluss auf die abgegebene (Sende-)Leistung.

Das Echosignal weist einen Empfangsparameter auf, wie z. B. eine Ist-Amplitude. Die Höhe der Ist-Amplitude hat Einfluss auf die Auswertbarkeit des Echosignals. Die Ist-Amplitude ist von Umgebungsbedingungen, wie z. B. der Temperatur, Luftfeuchtigkeit, Wind oder auch dem Element oder Objekt, an welchem die Reflexion erfolgt, d. h. also beispielsweise der Referenz, abhängig. Zum Beispiel ist ein von einer glatten Asphaltoberfläche reflektiertes resultierendes Amplitudensignal höher als ein Amplitudensignal, welches an einer dünnen Drahtseilreferenz erhalten wird.

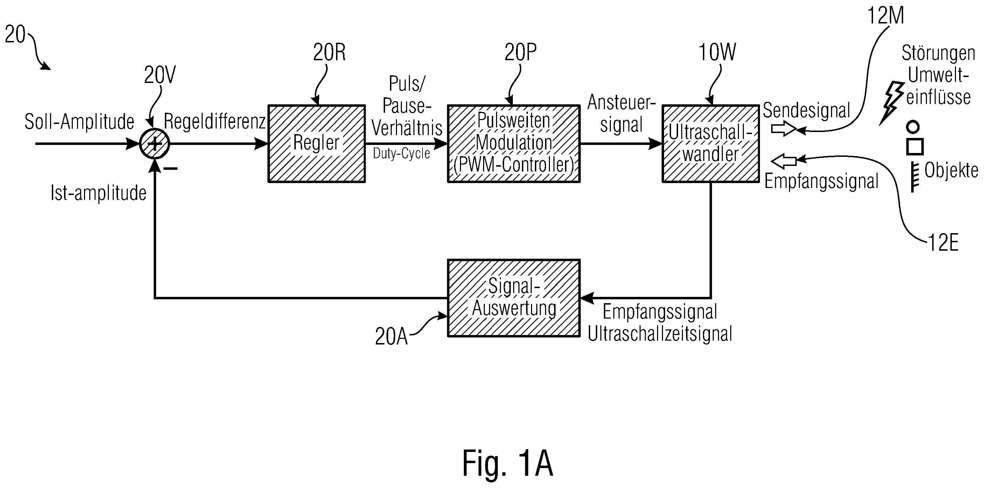

Um nun eine optimale Ist-Amplitude des Echosignals 12e zu erhalten bzw. ein gut auswertbares Signal 12E zu erhalten, wird der Regelkreis 20 vorgesehen. Dieser erhält und analysiert den entsprechenden Empfangsparameter (vgl. Pfeil EP) und passt in Abhängigkeit von dem Empfangsparameter EP den entsprechenden Sendeparameter (vgl. Pfeil SP) an. Von diesem Parameter SP ist die Sendeleistung abhängig, die als Stellgröße des geschlossenen Regelkreises umfassend die Elemente 10 und 20 dient. Die zu regelnde Größe ist allerdings der Empfangsparameter EP, wie z. B. die Empfangsamplitude. Insofern erfolgt gemäß diesem Ausführungsbeispiel eine Regelung auf die Empfangsamplitude. Diese kann entsprechend Ausführungsbeispielen beispielsweise konstant gehalten werden oder gemäß einem entsprechenden Soll-Wert. Nachfolgend wird Bezug nehmend auf Fig. 1a ein exemplarischer Regelkreis erläutert.

Fig. 1a zeigt das Blockschaltbild eines Regelkreises 10, bei der die Ist-Amplitude eines empfangenen Ultraschallsignals 12E auf eine vorgegebene Soll-Amplitude geregelt wird (vgl. Vergleicher 20V). Aus der Regeldifferenz (Differenz zwischen Soll- und Ist-Amplitude) berechnet der Regler 20R ein entsprechendes Puls-Pause-Verhältnis (sogenannten Tastgrad bzw. Duty-Cycle) für die Pulsweitenmodulation (PWM-Controller bzw. PWM Modulator) 20P. Dieser generiert ein Ansteuersignal für den Ultraschallwandler 10W, der dazu angeregt wird, ein Ultraschallsignal 12M auszusenden. Dieses ausgesendete Ultraschallsignal 12M wird beim Auftreffen auf verschiedene Objekte, wie beispielsweise einem Untergrund oder einem Referenz- oder Führungsseil, von diesen reflektiert und vom Ultraschallwandler 10W empfangen. Störungen, wie beispielsweise die eingangs genannten Umwelteinflüsse (Temperatur etc.), beeinflussen sowohl das ausgesendete wie auch das reflektierte und vom Ultraschallwandler 10W empfangene Ultraschallsignal 12E. Das vom Ultraschallwandler 10W empfangene Ultraschallsignal 12E wird einer Signalauswertung 20A zugeführt und in diesem Block beispielsweise gefiltert und digitalisiert. Aus dem Regelkreis gemäß Fig. 1a ist deutlich zu erkennen, dass die Empfangsamplitude des vom Ultraschallwandler 10W empfangenen Ultraschallsignals 12E die zu regelnde Größe darstellt.

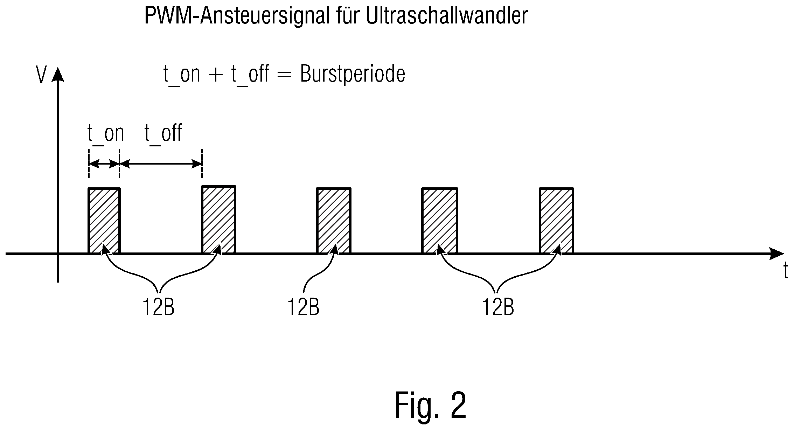

In Fig. 2 ist das für den Ultraschallwandler generierte PWM-Ansteuersignal etwas detaillierter dargestellt. Der Ultraschallwandler wird durch fünf aufeinanderfolgende Burstsignale (d. h. Rechteckimpulssignale) 12B gleicher Frequenz und gleicher Amplitude U (Pulshöhe bzw. Puls-Amplitude) angeregt. Denkbar ist es in diesem Zusammenhang auch, mehr als fünf oder aber auch weniger Burstsignale 12B, beispielsweise nur drei, auszugeben um den Ultraschallwandler anzuregen. Im Beispiel gemäß Fig. 2 beträgt das Puls-Pause-Verhältnis (bzw. der Tastgrad oder Duty-Cycle) der Signale ca. 30 %, d. h. das Burstsignal ist für ca. 30 % der Signal-Periodendauer eingeschaltet (Impulsdauer t_on) und für ca. 70 % der Signal-Periodendauer ausgeschaltet (Pausendauer t_off). Die Signal-Periodendauer der Burstsignale 12B beträgt t_on + t_off, woraus sich die Frequenz der Burstsignale 12B als Kehrwert der Periodendauer ergibt. Hierbei ist anzumerken, dass alternativ oder zusätzlich zu einer Veränderung des Puls-Pause-Verhältnisses die Puls-Amplitude U der Burstsignale (d. h. der Rechteckimpulssignale) 12B auch variiert, d. h. verändert oder angepasst werden kann.

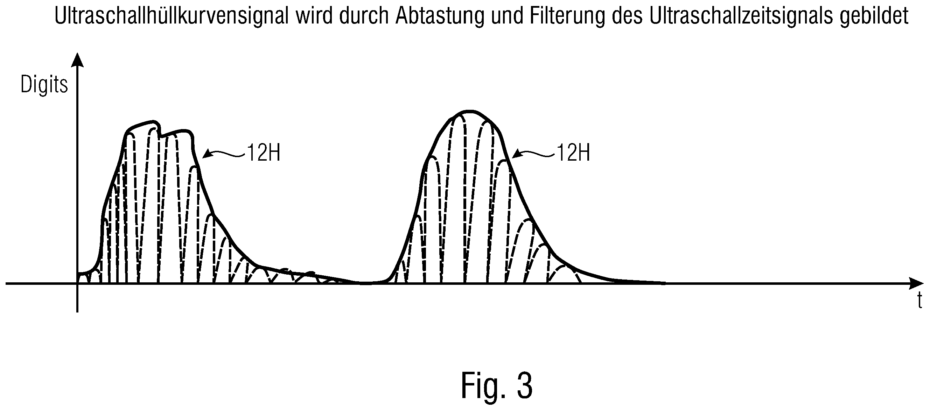

Fig. 3 zeigt schematisch zwei Hüllkurven 12H von Ultraschallsignalen. Die erste Hüllkurve 12H (links) zeigt das vom Ultraschallwandler ausgesendete Ultraschallsignal, die zweite Hüllkurve 12H (rechts) zeigt das vom Ultraschallwandler empfangene Ultraschallsignal. Der Ultraschallwandler wird - wie oben beschrieben - über ein von der Pulsweitenmodulation (PWM-Controller) erzeugten PWM-Ansteuersignal angeregt (Anregungsphase) und sendet dann ein Ultraschallsignal aus. Dabei hat das wie oben beschriebene Puls-Pause-Verhältnis und/oder die Puls-Amplitude U des PWM-Ansteuersignals Einfluss auf die Signalstärke des ausgesendeten Ultraschallsignal, d. h. eine Erhöhung des Puls-Pause-Verhältnisses und/oder eine Erhöhung der Puls-Amplitude U führt dazu, dass das ausgesendete Ultraschallsignal eine höhere Signalstärke aufweist, da der Ultraschallwandler das Signal mit einer höheren Sendeleistung aussendet. Eine Verringerung des Puls-Pause-Verhältnisses und/oder der Puls-Amplitude U führt entsprechend zu einer niedrigeren Signalstärke. Nach dem Aussenden des Ultraschallsignals schwingt der Ultraschallwandler in der Regel noch etwas nach, sodass die Amplitude des ausgesendeten Ultraschallsignals gemäß dem gezeigten Signalverlauf langsam abfällt. Nach dem Aussenden des Ultraschallsignals kann mit dem gleichen Ultraschallwandler das bzw. die von der Umgebung bzw. von Objekten reflektierten Signale empfangen werden. Das erste vom Ultraschallwandler empfangene Ultraschallsignal zeigt die zweite Hüllkurve 12H (rechts). Die Signalstärke dieses empfangenen Ultraschallsignals hängt einerseits davon ab, wie stark das oder die Objekte das ausgesendete Ultraschallsignal reflektieren und wie groß die eingangs genannten Störgrößen wie Umwelteinflüsse etc. sind, andererseits kommt es auch darauf an, wie hoch die Signalstärke des vom Ultraschallwandler ausgesendeten Ultraschallsignals war.

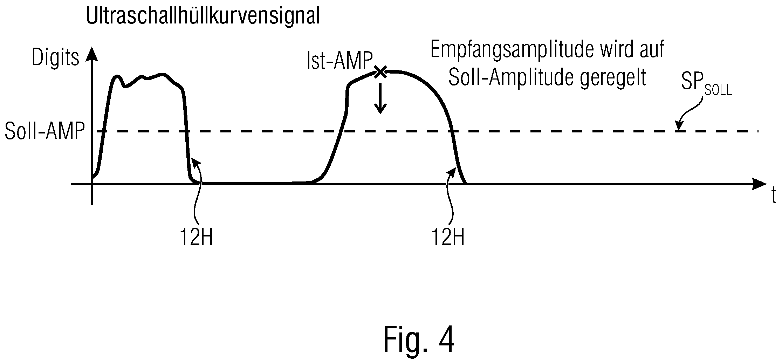

Fig. 4 zeigt die zwei Hüllkurven 12H der Ultraschallsignale aus Fig. 3 sowie einen Soll-Amplitudenwert für das empfangene Ultraschallsignal, dargestellt durch eine gestrichelte und waagrechte Linie. Wie gezeigt, so liegt der Ist-Amplitudenwert des Empfangssignals (zweite Hüllkurve 12H rechts) über dem Soll-Amplitudenwert, so dass mittels der zuvor beschriebenen Regelung die Signalstärke des ausgesendeten Ultraschallsignals so lange verringert werden muss, bis sich der Wert der Ist-Amplitude des Empfangssignals dem Wert der Soll-Amplitude SP_{Soll} angleicht.

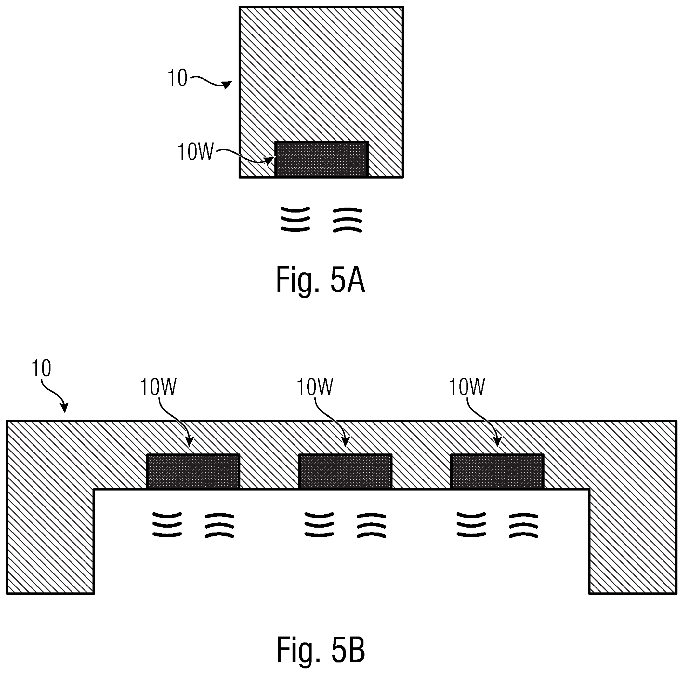

Fig. 5a zeigt einen Ultraschallsensor mit einem Ultraschallwandler 10W. Dieser Sensor 10 ist mit dem oben erläuterten Regelkreis 20 kombinierbar. Hierbei kann der Regelkreis 20 in den Sensor integriert sein.

Bei diesem Sensor kann es sich beispielsweise um einen Ultraschallsensor für eine Baumaschine handeln, der beispielsweise an einem Werkzeug, wie z. B. der Einbaubohle eines Straßenfertigers oder der Schar eines Graders, oder an einer Straßenfräse oder einem Gleitschalungsfertiger befestigt ist und einen Abstand zum Untergrund oder zu einem Referenzseil oder Referenzdraht, d. h. also beispielsweise eine Höhe, misst. Deshalb ist der Wandler 10W an der Unterseite des Sensors 10 angeordnet und nach unten gerichtet.

Fig. 5b zeigt eine Weiterentwicklung des Ultraschallsensors 10 aus Fig. 5a. Hier ist schematisch ein sogenannter Sonic-Ski-Sensor gezeigt, der mehrere Wandler 10W, hier beispielsweise drei Wandler 10W, aufweist. Diese sind nebeneinander angeordnet und tasten analog zu dem Sensor 10 aus Fig. 5a den Untergrund ab. Die Wandler können beispielsweise abwechselnd angesteuert werden, so dass keine gegenseitige Beeinflussung vorliegt. Das resultierende Abstandssignal bzw. Höhensignal wird beispielsweise durch Mittelung über die drei Wandler 10W ermittelt. Alle Wandler können mit einem entsprechenden Regelkreis 20 kombiniert sein bzw. der Regelkreis 20 kann alle Wandler einzeln oder in Kombination steuern, wie bereits oben erläutert wurde.

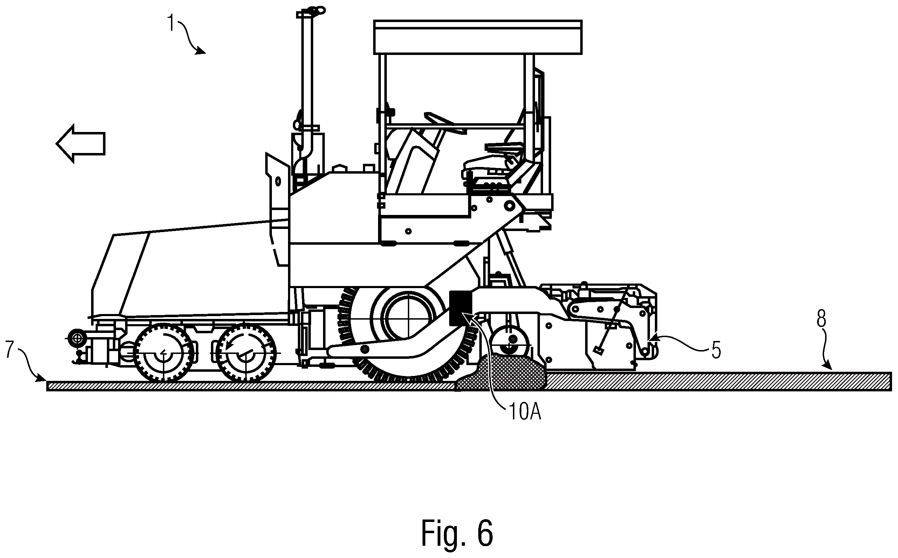

Diese Ultraschallsensoren 10 aus Fig. 5a und 5b sind an einer Baumaschine 1, wie sie in Fig. 6 gezeigt ist, einzusetzen. Fig. 6 zeigt schematisch einen selbstfahrenden Straßenfertiger 1 in einer seitlichen Ansicht, mit einem Fahrerstand und einem im vorderen Bereich angeordneten Gutbunker zur Aufnahme von Straßenbelagsmaterial, beispielsweise Asphaltmaterial. Der Straßenfertiger 1 fährt auf einem vorbereiteten Untergrund 7 in Fahrtrichtung, um auf dem vorbereiteten Untergrund 7 eine zu fertigende Straßendecke 8 bzw. einen zu fertigenden Straßenbelag 8 aufzubringen. In Fahrtrichtung gesehen ist hinten am Straßenfertiger 1 eine höhenverstellbare Einbaubohle 5 vorgesehen, an der an der Vorderseite ein Vorrat des Straßenbelagsmaterials angehäuft wird und vor der Einbaubohle 5 verteilt wird, so dass hier eine ausreichend große Menge des Straßenbelagsmaterials bevorratet wird. Die Einbaubohle 5 ist an Zugarmen gehalten, welche jeweils auf der linken und rechten Seite des Straßenfertigers 1 um im Mittelbereich des Straßenfertigers 1 angeordnete Zugpunkte drehbeweglich gelagert sind. Die Höhenlage der Einbaubohle wird über verstellbare Zugpunkte bzw. eine Verstelleinrichtung, wie eine Hydraulikeinrichtung, angepasst. Dazu werden Höhenwerte der Bohle durch den Sensor 10A ermittelt. Der Sensor ist beispielsweise an der Bohle 5 an dem (linken oder rechten) Zugarm befestigt und gegenüber dem Untergrund 7 ausgerichtet. Da die Bohle 5 auf dem Asphaltmaterial 8 "aufschwimmt", kann so ausgehend von den mittels des Sensors 10A ermittelten Messwerten eine Höhenregelung erfolgen.

Beispielsweise kann der Ultraschallsensor 10A an der Bohle angeordnet sein, der somit eine Höhe der Bohle 5 und damit der aufzubringenden Schicht 8 gegenüber dem Untergrund 7 bestimmt. Entsprechend Ausführungsbeispielen können auch mehrere Sensoren an der Baumaschine 1 angeordnet sein. Sensor 10A ist im vorderen Bereich der Bohle so angeordnet, dass hier eine Messung gegenüber dem Untergrund 7 erfolgt.

Unter Kenntnis der Abstandssignale bzw. Höhensignale kann eine Höhenregelung bzw. automatisierte Höhenregelung der Bohle 5 erfolgen.

Selbstverständlich sind entsprechend weiteren Ausführungsbeispielen auch andere Anwendungen des Sensors 10A möglich, wie z. B. im Zusammenhang mit einer Straßenfräse, bei welcher beispielsweise die Höhenregelung bzw. Tiefenregelung der abzutragenden Schicht erfolgt.

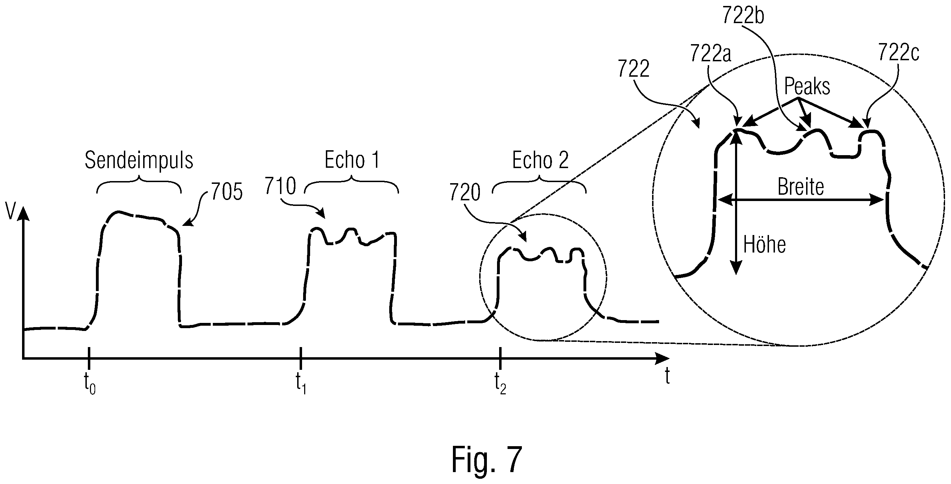

Bezugnehmend auf die Fig. 7, 8, 9a-c sowie 10 wird ein weiteres Ausführungsbeispiel beschrieben. Fig. 7 zeigt ein Messsignal, hier in Form von Spannung über Zeit mit zwei Echos, die mit den Bezugszeichen 710 und 720 versehen sind und aus dem Anregungssignal 705 herrühren. Wie anhand des Echos 720 zu erkennen ist, weist das Echo 720 eine Echosignalcharakteristik 722 mit den Maxima 722a, 722b und 722c auf.

Aus dem oder den empfangenen Echosignal(en) 710 und 720 lassen sich weitere Parameter oder charakteristische Eigenschaften des Bodens oder Untergrunds ermitteln, wie bspw. eine Krümelstruktur des Bodens oder ein Rauheitsparameter. So ist es möglich, anhand der Breite und der Höhe (vgl. Echo 722) der Hüllkurve des Echosignals sowie aus dem Signalverlauf des Echosignals bzw. aus den im Signalverlauf enthaltenen Signalpeaks, Amplitudensprüngen und/oder der Anzahl der im Signalverlauf enthaltenen Signalpeaks, eine oder mehrere Kenngrößen für eine (qualitative) Bewertung der Bodenstruktur (Krümelstruktur) oder einen Rauheitsparameter des Bodens oder Untergrunds zu ermitteln. Diese Kenngrößen können bspw. eine Einteilung der Bodenstruktur (Krümelstruktur) in eine oder mehrere Kategorien sein, wie bspw. "fein" oder "grob", d. h. feinkrümeliger oder grobkörniger Boden. Denkbar ist es dabei auch, je nach Anwendungszweck, eine feinere Einteilung in bspw. drei oder mehr Kategorien vorzunehmen, wie bspw. "fein", "mittel", "grob", oder "sehr fein", "fein", "mittel", "grob", "sehr grob".

Beispielsweise ist es möglich, aus dem oder den empfangenen Echosignal(en) zu ermitteln, ob ein Boden/Feld mit dem Pflug oder mit einer Egge bearbeitet wurde. Auch kann aus der Krümelstruktur des Bodens ein Grad der Einmischung von bspw. einer Zwischenfrucht in die Erde ermittelt werden. Zwischenfrüchte sind Pflanzen, die in der Landwirtschaft zwischen zwei Hauptkulturen (z. B. Getreide, Mais) angebaut werden, um den Boden zu bedecken, die Struktur zu verbessern und Nährstoffe zu speichern. Sie dienen als Gründüngung, Erosionsschutz, Humusaufbau und Unterdrückung von Unkraut. Wie gut sich eine Zwischenfrucht in die Erde einarbeiten lässt, ist in der Regel abhängig von der Bodenbeschaffenheit (trockener oder nasser Boden, lockerer oder schwerer/lehmiger Boden, ...). Zur Erfassung der Bodenstruktur bzw. der Krümelstruktur des Bodens ist die Messvorrichtung (Sensor) vorzugsweise am Heck der Maschine oder des Anbaugeräts angeordnet und auf den bereits bearbeiteten Boden bzw. Untergrund gerichtet.

Insofern ist entsprechend Ausführungsbeispielen die Auswerteeinheit ausgebildet, basierend auf dem Echosignal 710 und/oder 720 bzw. insbesondere aus der Echosignalcharakteristik 722 einen Parameter, der die Oberflächenstruktur beschreibt, zu bestimmen.

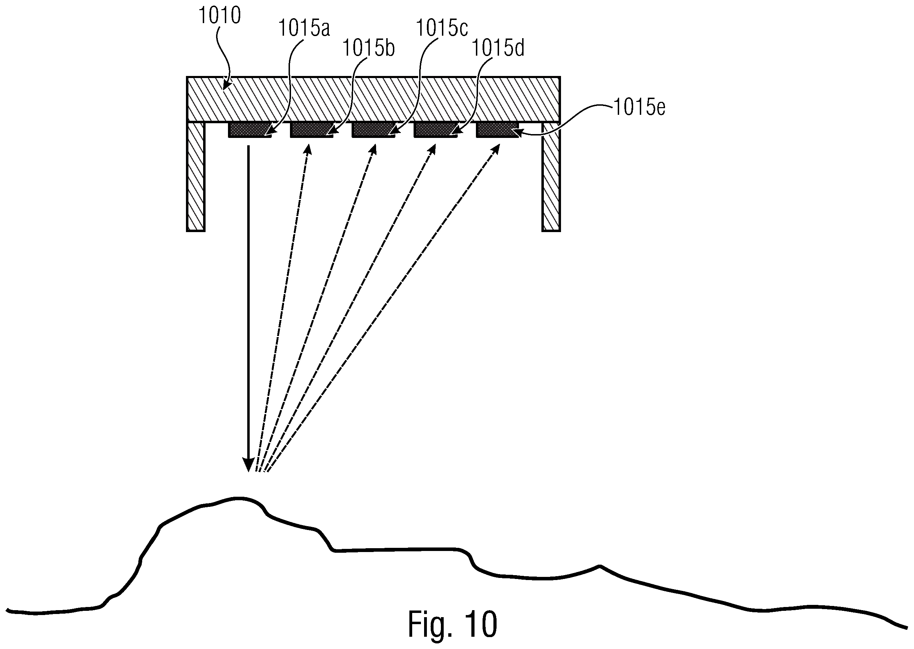

Entsprechend Ausführungsbeispielen kommt bevorzugterweise ein beispielsweise in Fig. 10 dargestellter Ultrasensor 1010 mit einer Mehrzahl an Messköpfen 1015a-1015e zum Einsatz. Der Sensorkopf 1015a sendet beispielsweise das Sensorsignal aus, während die Sensorsignale 1015b-1015e das oder die Echosignale erhalten.

Misst man während der Bodenbearbeitung, wie gut diese Einmischung erfolgt, so kann das Anbaugerät wie bspw. eine Kreiselegge entsprechend eingestellt oder ein an dem Anbaugerät angebrachtes Werkzeug wie bspw. ein Schild (Prallschild oder Prallschiene, oft auch Planierschiene oder Krümelschiene genannt) automatisch geregelt werden. Das Prallschild oder die Prallschiene an der Kreiselegge wird eingestellt, um die Krümelstruktur zu optimieren. Dazu kann die bereits beschriebene Regelung des Ultraschallsignals um eine entsprechende Werkzeug-Regelung mit vorgeschalteter Ermittlung der Krümelstruktur des Bodens erweitert werden. Beide Regelungen greifen auf das bzw. die gleichen empfangenen Echosignale zurück, d. h., dass sowohl die Regelung des Ultraschallsignals als auch die Werkzeug-Regelung, bei der zuvor die weiteren Parameter bzw. charakteristischen Eigenschaften des Bodens oder Untergrunds ermittelt werden, jeweils eine Signalauswertung aufweisen, die ausgebildet ist, einen entsprechenden Empfangsparameter des Echosignals wie bspw. eine Ist-Amplitude oder die Breite und Höhe der Hüllkurve des Echosignals zu bestimmen. Für beide Regelungen können separate Soll-Werte oder Soll-Parameter vorgegeben werden.

Insofern kann entsprechend Ausführungsbeispielen eine Regelungseinheit, ein Regelung wie z.B. eine Höhenregelung oder eine Richtungssteuerung oder eine Tiefenführung oder eine Werkzeugregelung für ein Werkzeug zur Veränderung der Bodenstruktur auf Basis der Ermittelten Struktur bzw. Krümelstruktur bzw. Rauheit durchführen.

Eine automatische Regelung eines an dem Anbaugerät angebrachten Werkzeugs, wie bspw. ein Prallschild oder eine Prallschiene an einer Kreiselegge, ist vorteilhaft, um eine optimale und gleichmäßige Bodenstruktur während der Bodenbearbeitung zu erreichen. Bekannter Stand der Technik ist es, das Prallschild oder die Prallschiene an der Kreiselegge manuell einzustellen, bspw. mit einer Spindel. Dazu fährt der Landwirt mit dem Gerät ein paar Meter, betrachtet sich das Ergebnis bzw. den Boden, nimmt dann entsprechende Veränderungen am Prallschild oder an der Prallschiene manuell vor und fährt weiter. Dieser Einstellvorgang kann sich noch ein paar Mal wiederholen, bis eine gewünschte Bodenstruktur oder ein gewünschter Grad der Einmischung erreicht ist.

Eine weitere Anwendung aus dem Bereich Landwirtschaft in Bezug auf die oben beschriebene Auswertung der charakteristischen Eigenschaften des empfangenen Echosignals wäre ein Kartoffelroder, bei dem die Messvorrichtung (Sensor) auf das Förderband gerichtet ist und Kartoffeln von Steinen unterschieden werden könnte. Kartoffelroder trennen Steine und Erdklumpen mithilfe mechanischer Verfahren, die auf den Unterschieden in Gewicht, Form und Rollverhalten zwischen Kartoffeln und Steinen basieren. Mithilfe der oben beschriebenen Auswertung könnte dieses mechanische Verfahren verbessert oder erweitert werden.

Auch im Bereich mobiler Baumaschinen gäbe es mögliche Anwendungen der oben beschriebenen Auswertung der charakteristischen Eigenschaften des empfangenen Echosignals, bspw. bei Bodenstabilisierern oder Brechern. Bodenstabilisierer mischen mit einem Fräs- und Mischrotor vorgestreute Bindemittel wie Kalk oder Zement in vorhandenen, wenig tragfähigen Boden ein. Dadurch verändert sich die Bodenstruktur. Diese lässt sich mithilfe der oben beschriebenen Auswertung erfassen und es kann der Einarbeitungsprozess entsprechend geregelt werden. Brecher werden zur Zerkleinerung harter Materialien wie Gestein oder Beton genutzt. Mithilfe der oben beschriebenen Auswertung könnte die Struktur des zerkleinerten Gesteins erfasst und ggf. die Einstellungen des Brechers geregelt oder verändert werden.

Um Interferenzen von mehreren empfangenen Echosignalen sowie Störungen beim Empfangen der Echosignale zu reduzieren oder zu vermeiden, können sowohl die bereits beschriebene Signalauswertung der Regelung des Ultraschallsignals als auch die Signalauswertung für die Ermittlung der Krümelstruktur des Bodens entsprechend erweitert werden. Interferenzen oder Störungen führen dazu, dass eine Auswertung der Hüllkurve oder des Signalverlaufs des Echosignals erschwert wird oder nicht möglich ist. In vorteilhafter Weise kann daher das empfangene Echosignal auf Interferenzen oder Störungen überprüft werden, und zwar bspw. anhand der Signalbreite (Breite der Hüllkurve des Echosignals) und/oder des Signalverlaufs.

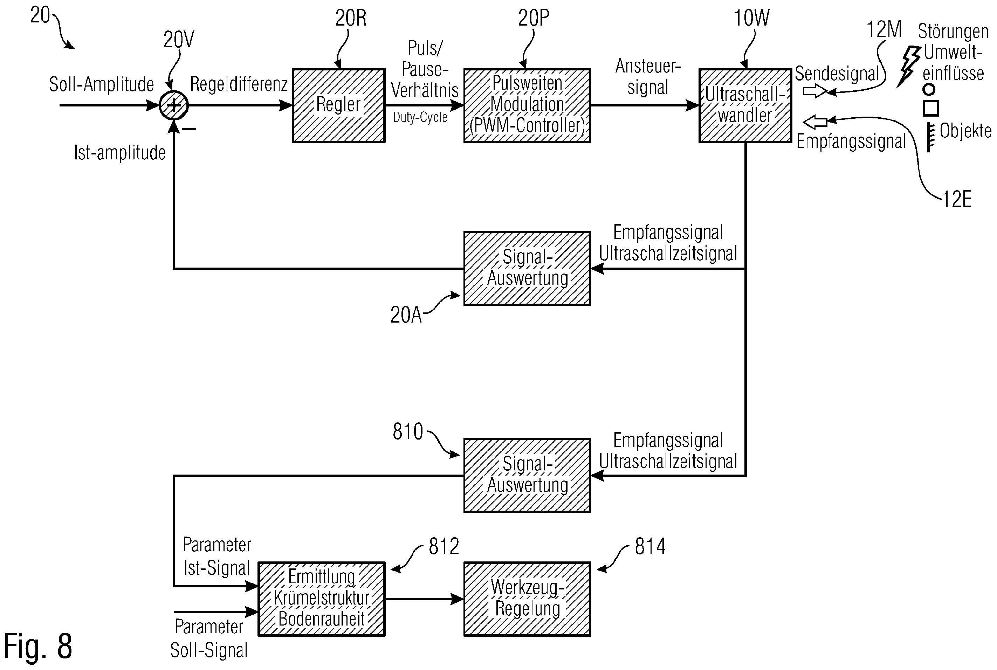

Die Regelung wird nun nachfolgend bezugnehmend auf Fig. 8 erläutert. Hierbei sei angemerkt, dass Fig. 8 eine Erweiterung des bereits in Fig. 1a gezeigten Blockschaltbilds eines Regelkreises 10, bei der die Ist-Amplitude eines empfangenen Ultraschallsignals 12e auf eine vorgegebene Soll-Amplitude geregelt wird (vgl. 20V), darstellt. Die Regelung aus Fig. 8 umfasst die zusätzliche Signalauswertung 810, die Ermittlung einer Krümelstruktur bzw. Bodenrauheit 812 sowie eine Werkzeugregelung 814.

Das vom Ultraschallwandler 10W empfangene Ultraschallsignal 12E wird einer weiteren Signalauswertung zugeführt, die vergleichbar mit der Signalauswertung 20A ist. In diesem Block wird das empfangene Ultraschallsignal 12E beispielsweise gefiltert und digitalisiert. So ermittelt bzw. filtert die weitere Signalauswertung bspw. eine Breite und eine Höhe der Hüllkurve des Echosignals sowie die im Signalverlauf enthaltenen Signalpeaks, Amplitudensprünge und/oder eine Anzahl der im Signalverlauf enthaltenen Signalpeaks als Ist-Parameter des Signals heraus. Diese Signal-Ist-Parameter werden der nachfolgenden Ermittlung der Krümelstruktur (vgl. 812) des Bodens bzw. Bodenrauheit zugeführt, welche dann aus den Ist-Parametern sowie den Vorgaben (Soll-Parameter) entsprechende Kenngrößen für eine (qualitative) Bewertung der Bodenstruktur (Krümelstruktur) oder einen Rauheitsparameter des Bodens oder Untergrunds ermittelt.

Diese Kenngrößen können bspw. eine Einteilung der Bodenstruktur (Krümelstruktur) in eine oder mehrere Kategorien sein, wie bspw. "fein" oder "grob" oder dergleichen, oder aber einen Grad der Einmischung von bspw. einer Zwischenfrucht in die Erde darstellen. Auch werden diese Kenngrößen an eine nachfolgende Werkzeug-Regelung als deren Eingangsparameter übertragen. Die Werkzeug-Regelung 814 kann ein eigenständiger Regelkreis sein, der bspw. ein an einem Anbaugerät angebrachtes Werkzeug in der Höhe und/oder der Winkellage verändert, wie bspw. ein Prallschild oder eine Prallschiene an einer Kreiselegge. Eine Veränderung der Höhe und/oder der Winkellage des Prallschilds oder der Prallschiene bewirkt, dass sich während der Bearbeitung die Krümelstruktur des Bodens verändert, d. h. die Bodenstruktur feiner oder gröber wird. Diese Veränderung der Bodenstruktur wird von der Messvorrichtung 10W (Sensor) erfasst, wenn diese bspw. am Heck der Maschine oder des Anbaugeräts angeordnet und auf den bereits bearbeiteten Boden bzw. Untergrund gerichtet ist. Folglich ändert sich auch der Signalverlauf des empfangenen Ultraschallsignals 12E bzw. die nach der weiteren Signalauswertung ermittelten bzw. gefilterten Ist-Parameter des Signals. Die sich daraus verändernden Kenngrößen werden wiederum der Werkzeug-Regelung zugeführt, welche dann ggf. Höhe und/oder Winkellage des Werkzeugs, hier das Prallschild oder die Prallschiene der Kreiselegge, anpasst.

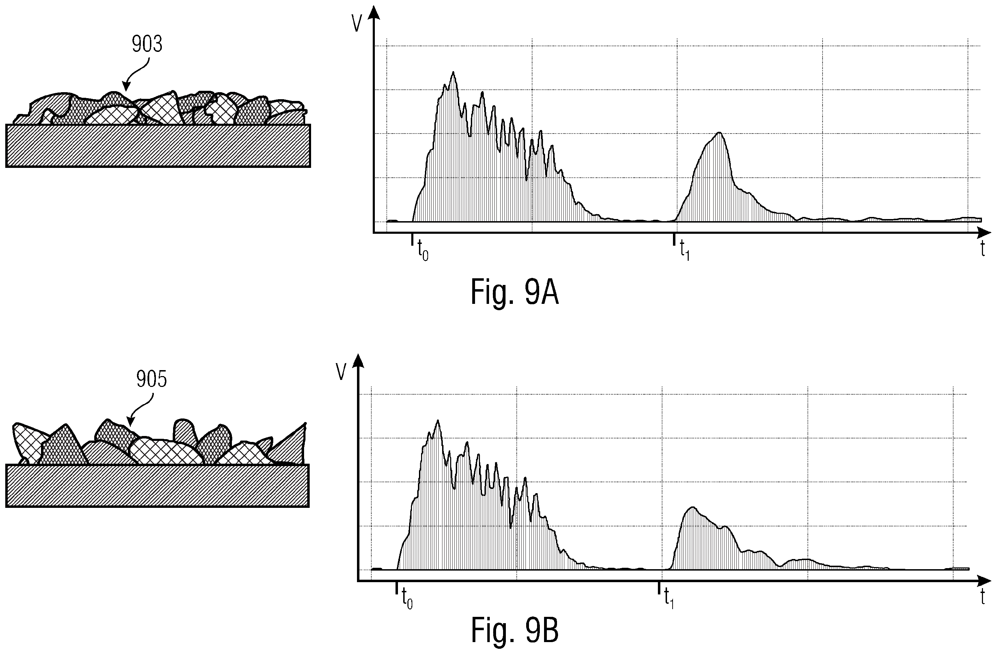

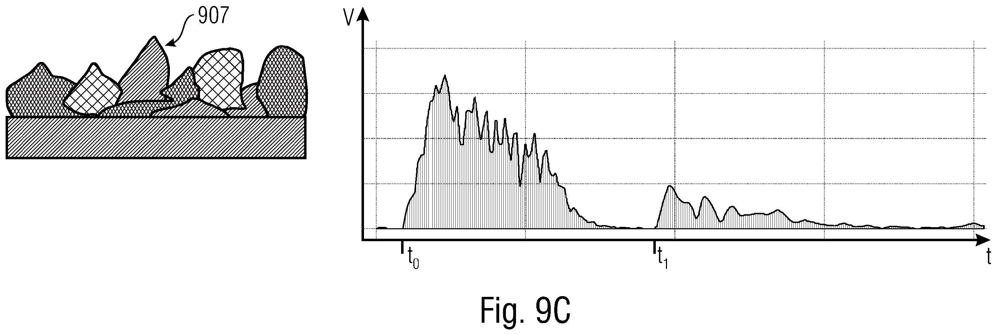

Die Fig. 9a- 9c zeigen die Signalverläufe des empfangenen Ultraschallsignals 12E bei jeweils unterschiedlichen Bodenstrukturen "fein", "mittel" und "grob" (entsprechend schematisch im linken Bereich der Figuren dargestellt). Zum Zeitpunkt t0 wird ein Ultraschallsignal 12M vom Ultraschallwandler 10W ausgesendet. Dieses ausgesendete Signal ist der Einfachheit halber bei allen drei Darstellungen gleich. Je nach Bodenstruktur ist das empfangene Ultraschallsignal 12E ab dem Zeitpunkt t1 bzgl. des Signalverlaufs an sich als auch bzgl. Höhe und Breite des Signals, aber auch bzgl. der Anzahl der im Signalverlauf enthaltenen Signalpeaks unterschiedlich, sodass hieraus eine oder mehrere Kenngrößen für eine (qualitative) Bewertung der Bodenstruktur (Krümelstruktur) oder einen Rauheitsparameter des Bodens oder Untergrunds ermittelt werden können. Die Fig. 9a zeigt eine feine Bodenstruktur 903. Der Signalverlauf enthält lediglich einen kurzen Signalpeak ab dem Zeitpunkt t1. Je gröber die Bodenstruktur wird, desto flacher und breiter verläuft dieser Signalpeak und es entstehen im Signalverlauf des empfangenen Ultraschallsignals 12E weitere kleinere Signalpeaks, wie in den Fig. 9b und 9c für eine mittlere und grobe Bodenstruktur 904 und 906 dargestellt. Eine grobe Bodenstruktur, wie in der letzten Figur dargestellt, weist bspw. keine sehr hohen, dafür aber mehrere solcher Signalpeaks auf.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Messvorrichtung, mit folgenden Merkmalen:
einem Ultraschallsensor (10, 10A, 10B), der ausgebildet ist, ein Messsignal (12M) mit einem entsprechenden Sendeparameter (SP) auszusenden und ein aus einer Reflexion des Messsignals (12M) herrührendes Echosignal (12E) zu empfangen;
einem geschlossenen Regelkreis (20), der ein Vergleichselement (20V) aufweist, das ausgebildet ist, eine Ist-Amplitude des Echosignals (12E) als Empfangsparameter (EP) mit einer Soll-Amplitude zu vergleichen und basierend auf einer Regeldifferenz resultierend aus dem Soll-Ist-Vergleich den Sendeparameter (SP) anzupassen.

2. Messvorrichtung gemäß Anspruch 1, wobei der Sendeparameter (SP) eine Pulsweite oder ein Puls-Pause-Verhältnis (t_on/t_off) des Messsignals (12M) charakterisiert und/oder wobei durch Anpassung des Sendeparameters (SP) eine Veränderung der Pulsweite und/oder der Leistung des Messsignals (12M) erfolgt.

3. Messvorrichtung gemäß Anspruch 1 oder 2, wobei der Sendeparameter (SP) eine Pulshöhe oder eine Puls-Amplitude (U) des Messsignals (12M) charakterisiert und/oder wobei durch Anpassung des Sendeparameters (SP) eine Veränderung der Puls-Amplitude (U) und/oder der Leistung des Messsignals (12M) erfolgt.

4. Messvorrichtung gemäß einem der vorherigen Ansprüche, wobei der Regelkreis (20) ausgebildet ist, den Sendeparameter (SP) gleitend oder in festen Schritten anzupassen.

5. Messvorrichtung gemäß einem der Ansprüche 2 oder 4, wobei der Regelkreis (20) ausgebildet ist, die Regelung so durchzuführen, dass die Ist-Amplitude des Echosignals (12E) konstant oder gleich der Soll-Amplitude gehalten wird.

6. Messvorrichtung gemäß einem der vorherigen Ansprüche, wobei der Regelkreis (20) ausgebildet ist, die Pulsweite und/oder die Puls-Amplitude (U) zu reduzieren, wenn die Ist-Amplitude des Echosignals (12E) als Empfangsparameter (EP) höher als die Soll-Amplitude ist, oder die Pulsweite und/oder die Puls-Amplitude (U) zu erhöhen, wenn die Ist-Amplitude des Echosignals (12E) als Empfangsparameter (EP) geringer als die Soll-Amplitude ist.

7. Messvorrichtung gemäß einem der vorherigen Ansprüche, wobei die Messvorrichtung mehrere Ultraschallsensoren (10, 10A, 10B) aufweist.

8. Messvorrichtung gemäß Anspruch 7, wobei der Regelkreis (20) ausgebildet ist, jeden einzelnen Ultraschallsensor (10, 10A, 10B) der mehreren Ultraschallsensoren (10, 10A, 10B) getrennt zu regeln oder mehrere oder alle der mehreren Ultraschallsensoren (10, 10A, 10B) gemeinsam zu regeln.

9. Messvorrichtung gemäß einem der vorherigen Ansprüche, wobei der Regelkreis (20) eine Signalauswertung (20A) aufweist, die ausgebildet ist, einen Empfangsparameter (EP) zu bestimmen, insbesondere eine Ist-Amplitude des Echosignals (12E) als Empfangsparameter (EP), zu bestimmen.

10. Messvorrichtung gemäß einem der vorherigen Ansprüche, wobei der Regelkreis (20) einen Regler (20R) aufweist, der ausgebildet ist, basierend auf der Regeldifferenz einen Anpassungsparameter zu bestimmen.

11. Messvorrichtung gemäß Anspruch 2, wobei der Regelkreis (20) einen PWM-Modulator aufweist, der ausgebildet ist, ausgehend von einem Anpassungsparameter die Pulsweite und/oder die Puls-Amplitude (U) des Messsignals (12M) zu variieren.

12. Messvorrichtung gemäß einem der vorherigen Ansprüche, wobei der Regelkreis (20) ausgebildet ist, eine Hüllkurve des Echosignals (12E) zu bestimmen oder eine maximale Ist-Amplitude des Echosignals (12E) zu bestimmen oder eine Filterung des Echosignals (12E) durchzuführen.

13. Messvorrichtung gemäß einem der vorherigen Ansprüche, wobei die Reflexion aus einer Reflexion an einer Referenz, insbesondere einem Referenzdraht, einem Referenzseil, einem zu bearbeitenden Untergrund oder einem Boden, herrührt.

14. Messvorrichtung gemäß einem der vorherigen Ansprüche, wobei die Messvorrichtung mit einer Steuerung für eine Höhenregelung und/oder Tiefenführung und/oder mit einer Richtungsregelung für eine Arbeitsmaschine oder einer Baumaschine verbunden ist.

15. Messvorrichtung gemäß einem der vorherigen Ansprüche, die eine Auswerteeinheit aufweist, die ausgebildet ist, basierend auf dem Echosignal (12E) einen Parameter, der eine Oberflächenstruktur beschreibt, zu bestimmen.

16. Messvorrichtung nach Anspruch 15, wobei die Bestimmung des Parameters Erfassen und/oder Abtasten einer Echosignalcharakteristik in dem Echosignal (12E) umfasst.

17. Arbeitsmaschine, insbesondere Baumaschine oder landwirtschaftliche Maschine, mit einer Messvorrichtung gemäß einem der vorherigen Ansprüche sowie einer Steuerung, die ausgebildet ist, eine Höhenregelung oder eine Richtungssteuerung oder eine Tiefenführung oder eine Werkzeugregelung, insbesondere in Abhängigkeit des Parameters durchzuführen.

18. Messvorrichtung, mit folgenden Merkmalen:
einem Ultraschallsensor (10, 10A, 10B), der ausgebildet ist, ein Messsignal (12M) mit einem entsprechenden Sendeparameter (SP) auszusenden und ein aus einer Reflexion des Messsignals (12M) herrührendes Echosignal (12E) zu empfangen;
eine Auswerteeinheit, die ausgebildet ist, basierend auf dem Echosignal (12E) einen Parameter, der ein Oberflächenstruktur beschreibt, zu bestimmen, wobei die Bestimmung des Parameters Erfassen und/oder Abtasten einer Echosignalcharakteristik in dem Echosignal (12E) umfasst.

19. Arbeitsmaschine, insbesondere Baumaschine oder landwirtschaftliche Maschine, mit einer Messvorrichtung gemäß einem der vorherigen Ansprüche sowie einer Steuerung, die ausgebildet ist, eine Höhenregelung oder eine Richtungssteuerung oder eine Tiefenführung oder eine Werkzeugregelung durchzuführen.

20. Verfahren zum Betreiben einer Messvorrichtung umfassend einen Ultraschallsensor (10, 10A, 10B), der ausgebildet ist, ein Messsignal (12M) mit einem entsprechenden Sendeparameter (SP) auszusenden und ein aus einer Reflexion des Messsignals (12M) herrührendes Echosignal (12E) zu empfangen, mit folgenden Schritten:
Ermitteln eines Empfangsparameters (EP) des Echosignals (12E);
Vergleichen einer Ist-Amplitude des Echosignals (12E) als Empfangsparameter (EP) mit einer Soll-Amplitude und Anpassen basierend auf einer Regeldifferenz resultierend aus dem Soll-Ist-Vergleich den Sendeparameter (SP).

21. Computerprogramm zur Durchführung des Verfahrens nach Anspruch 20, wenn das Verfahren auf einem Computer oder einer Steuerung abläuft.
